# FASCICULE DE BREVET EUROPEEN

(11) **EP 2 234 335 B1**
(45) Date de publication et mention de la délivrance du brevet: **15.02.2012**
(21) Numéro de dépôt: 10157995.1
(22) Date de dépôt: 26.03.2010
(51) Int. Cl.: H04L 12/28, H04W 48/16, H04L 12/56

(54) **Procédé de transmission d'une requête d'autodiagnostic d'un boîtier multiservice à un serveur d'un réseau haut débit**
Übertragungsverfahren einer Autodiagnose-Anfrage eines Mehrzweckgehäuses an einen Server eines Hochgeschwindigkeitsnetzes
Method for transmitting a self-diagnosis request from a multi-service box to a server of a high-speed network

(30) Priorité: 26.03.2009 FR 0901676
(43) Date de publication de la demande: 29.09.2010
(73) Titulaire: Societé Française du Radiotéléphone, 75008 Paris (FR)
(72) Inventeur: Brocas, Laurent, 75015 Paris (FR)
(74) Mandataire: Lotaut, Yacine Diaw

(56) Documents cités:
- EP-A1- 1 562 390
- EP-A1- 1 995 918
- WO-A2-2007/106843

## Description

### Domaine de l'invention

La présente invention a pour objet un procédé de transmission automatique d'une requête d'autodiagnostic d'un boîtier multiservice à un serveur d'un réseau haut débit d'un fournisseur d'accès à Internet.

Le domaine de l'invention est celui de l'élaboration et de la transmission d'une requête d'autodiagnostic du boîtier multiservice en cas de connexion non effective dudit boîtier au réseau haut débit.

Un but de l'invention est de simplifier les procédures de diagnostic d'un défaut de connexion du boîtier multiservice au réseau haut débit.

L'invention a également pour objet un boîtier multiservice comportant des moyens aptes à exécuter le procédé de l'invention.

### Etat de la technique

Aujourd'hui, le réseau haut débit, communément connu sous le nom de réseau ADSL ou FTTH, touche désormais une partie non négligeable de la population et par corollaire, les boîtiers multiservice de connexion au réseau ADSL. Ce type de boîtier multiservice est appelé couramment box '. Les box proposent des offres Triple-Play (Internet, téléphonie et télévision) ainsi que de nombreuses fonctionnalités très utiles qui vont du routeur au Wi-Fi, quand elles ne se transforment pas en magnétoscopes numériques avec leurs disques durs intégrés.

Aujourd'hui, en cas de connexion non effective au réseau ADSL, l'abonné doit s'adresser au service client de son Fournisseur d'Accès Internet (FAI) pour rétablir ladite connexion. Le service client établit à distance un diagnostic du défaut de connexion avec l'aide de l'abonné. Ce diagnostic est établi via une méthode basée sur l'élimination de différentes causes possibles de pertes de connexion préétablies.

Pour chaque cause possible de perte de connexion, l'abonné effectue une série de tests dont il communique les résultats au service client. Ces tests sont effectués entre autres sur le boîtier, le routeur Ethernet ou Wi-Fi, les câbles, l'état de branchement des câbles, la carte réseau, le pilote de cette carte ou du boîtier, la prise téléphonique et les paramètres réseau du système d'exploitation. Si l'un de ces éléments subit un dysfonctionnement, le service client le détecte à partir des informations fournies par l'abonné et le corrige afin de rétablir la connexion.

Toutefois, ce type de diagnostic à distance présente des inconvénients. En effet, l'abonné doit nécessairement contacter le service client pour signaler une perte de connexion, le plus souvent par téléphone.

En outre, dans le cas où le téléphone sur ligne de l'abonné utilise la téléphonie sous IP via le réseau ADSL, la perte de connexion entraîne également une interruption de la ligne téléphonique. Dans ce cas, il est uniquement possible de joindre le service client via d'autres modes de communication tel qu'un téléphone mobile.

Pour établir le diagnostic, l'abonné est mis fortement à contribution. En effet, il doit comprendre les instructions du service client, les exécuter et leur transmettre les résultats. L'exécution des instructions du service client se révèle souvent être un véritable casse-tête pour le profane ou même parfois pour l'amateur averti. L'établissement du diagnostic à distance nécessite souvent un temps relativement long. Ce temps est d'autant plus long que l'abonné est un néophyte.

L'intervention d'un technicien est souvent nécessaire au domicile de l'abonné pour établir le diagnostic, lorsque les résultats transmis sont incertains, augmentant de ce fait les coûts du FAI.

Il est connu le document WO 2007/106843 (D1) qui propose une solution en cas d'interruption de connexion. Ce document décrit des réseaux de fournisseurs de services reliés à des équipements privés d'abonné (CPE) par l'intermédiaire de liaisons de communication de données. Chaque CPE comporte une passerelle résidentielle. La passerelle comporte un dispositif de communication principal relié aux liaisons de communications. Ladite passerelle comporte également un dispositif de communication secondaire dont la connexion aux liaisons de communications est déclenchée lorsque la connexion entre le dispositif de communication principal et les liaisons de communications est interrompue.

Ainsi, en cas de connexion non effective au réseau de fournisseurs de services, le dispositif de communication secondaire permet à la passerelle de communiquer avec le fournisseur de services de sorte à effectuer des essais de diagnostics afin de déterminer la source de l'interruption ou de la dégradation de services de communication.

Toutefois, avec D1 un problème se pose lorsque la connexion entre les liaisons de communication et les deux dispositifs de communication est interrompue. D1 présente ainsi les mêmes inconvénients que ci-dessus cités à savoir simplifier l'établissement d'un diagnostic, lorsque la connexion entre le dispositif secondaire et la liaison de communication est également interrompue.

Ainsi, actuellement et depuis un certain temps, un besoin de simplifier l'établissement des diagnostics en cas de perte de connexion, s'est fait sentir.

### Exposé de l'invention

L'invention a justement pour but de répondre à ce besoin en remédiant aux inconvénients des techniques exposées précédemment. Pour cela, l'invention propose un procédé d'élaboration et de transmission automatique d'un autodiagnostic de la connexion ADSL d'un abonné au service client du FAI.

Pour ce faire, l'invention met en oeuvre un algorithme d'élaboration d'un état de configuration du boîtier multiservice, lorsque la connexion au réseau haut débit du FAI n'est pas effective. Cet état de configuration comportera entre autres le statut des branchements sur le boîtier et les erreurs rencontrées lors de la connexion.

L'invention met également en oeuvre un algorithme de détection de réseau radio de modems avoisinants connectés à un réseau haut débit. L'algorithme de l'invention sélectionne un des réseaux radio selon notamment la qualité du signal émis. Puis, l'état de configuration est transmis par le boîtier au serveur du réseau haut débit du FAI via le réseau radio sélectionné.

Ainsi, avec l'invention, un boîtier multiservice d'un utilisateur émet une requête de sondage de disponibilité de réseau haut débit avoisinant, via un réseau sans fil, lorsque sa connexion au réseau haut débit du FAI est interrompue. Des boîtiers secondaires situés à proximité, ayant leur réseau haut débit qui fonctionne, détectent la requête de sondage émis via leur réseau local sans fil. Ces boîtiers secondaires envoient en réponse une requête de balise. Le boîtier principal sélectionne un réseau haut débit à partir des requêtes de balise reçues selon des critères prédéfinis. Puis, il transmet au serveur du FAI, via le réseau haut débit sélectionné, une requête d'urgence comportant son autodiagnostic de défaut de connexion.

De ce fait, de manière instantanée et automatique, le service client dispose des informations sur les pertes de connexions des abonnés sur le réseau haut débit en temps réel.

L'invention est ainsi apte à créer un réseau Peer-to-Peer de boîtiers multiservice permettant en cas de défaillance de connexion haut débit de réaliser une remontée automatique de panne et un diagnostique du problème.

L'invention a donc pour objet un procédé de transmission automatique d'une requête d'urgence d'autodiagnostic d'un boîtier principal multiservice à un serveur d'un réseau haut débit caractérisé en ce qu'il comporte les étapes suivantes :
- on détecte un défaut de synchronisation du boîtier avec un signal haut débit,
- on envoie une requête de sondage de disponibilité à des réseaux radio avoisinants via des moyens de transmission sans fil du boîtier,
- des boîtiers secondaires multiservice, ayant détecté la requête de sondage via leur réseau local radio, élaborent des requêtes de balise comportant des informations relatives à la capacité et à la ressource de leur réseau local radio et de leur réseau haut débit,
- on transmet les requêtes de balise élaborées au boîtier principal via le réseau radio,
- on sélectionne un des réseaux radio avoisinants disponible via des critères de discrimination prédéfinis, à partir des requêtes de balise reçues,
- on transmet une requête d'urgence au serveur du réseau via le réseau haut débit sélectionné, la requête d'urgence comportant un état de configuration du boîtier principal.

Avantageusement, l'invention est également caractérisée en ce que
- des téléphones mobiles, ayant détecté la requête de sondage via leur réseau local radio, élaborent des signalisations comportant des informations relatives à la capacité et à la ressource de leur réseau local radio et de leur réseau haut débit,
- on transmet les signalisations élaborées au boîtier principal via le réseau radio.

Avantageusement, l'invention est également caractérisée en ce que
- on déclenche une fenêtre temporelle d'écoute de requêtes de balise et/ou de signalisations, en réponse à la requête de sondage émise par le boîtier principal.

Avantageusement, l'invention est également caractérisée en ce que les critères de discrimination de sélection d'un réseau haut débits comportent:
- l'affectation à chaque requête de balise et/ou de signalisation d'un attribut de qualité déterminé en fonction de la puissance du signal, de la capacité et des ressources du réseau radio correspondant,
- la détermination des ressources des réseaux haut débit correspondants.

Avantageusement, l'invention est également caractérisée en ce que les critères de discrimination comportent en outre :
- le type de sécurisation des réseaux radio, et
- l'appartenance au même fournisseur d'accès Internet des boîtiers multiservice secondaire ou des téléphones mobiles avec le boîtier principal.

Avantageusement, l'invention est également caractérisée en ce que la sélection des réseaux haut débit avoisinants disponibles comporte les étapes suivantes:
- on applique une opération de discrimination aux critères de discrimination,
- on privilégie un réseau haut débit en fonction du résultat de cette opération de discrimination.

Avantageusement, l'invention est également caractérisée en ce que l'opération de discrimination est un maximum ou un opérateur logique.

Avantageusement, l'invention est également caractérisée en ce que
- on émet du boîtier principal vers le réseau radio privilégié une requête de partage de ressource du réseau haut débit correspondant,
- on autorise la requête de partage de ressource en fonction de critères d'autorisation préalablement définis.

Avantageusement, l'invention est également caractérisée en ce que
- on émet du réseau haut débit sélectionné vers le serveur du réseau une requête de demande d'autorisation comportant la requête de partage de ressource reçue.

Avantageusement, l'invention est également caractérisée en ce que la requête d'urgence comporte des informations relatives à un état de configuration du boîtier principal destiné à un diagnostic du défaut de connexion du boîtier principal au réseau haut débit.

Avantageusement, l'invention est également caractérisée en ce que
- on collecte un historique des requêtes d'urgence dans une base de données du serveur du réseau.

Avantageusement, l'invention est également caractérisée en ce que le réseau haut débit est un réseau ADSL ou un réseau satellite ou un réseau à fibre optique.

Avantageusement, l'invention est également caractérisée en ce que le réseau radio est un réseau Wi-Fi et/ou un réseau Bluetooth et/ou un réseau Wimax.

L'invention a également pour objet un boîtier multiservice comportant des moyens aptes à mettre en oeuvre le procédé de l'invention de transmission automatique d'une requête d'autodiagnostic à un serveur d'un réseau haut débit par l'intermédiaire d'un boîtier multiservice secondaire.

### Brève description des dessins

L'invention sera mieux comprise à la lecture de la description qui suit et à l'examen des figures qui l'accompagnent. Celles-ci sont présentées à titre indicatif et nullement limitatif de l'invention.

Les figures 1 et 2 montrent une représentation schématique d'un réseau haut débit d'un FAI connecté à des boîtiers multiservice munis des moyens perfectionnés de l'invention.

La figure 3 montre une illustration de moyens mettant en oeuvre le procédé de l'invention.

### Description détaillée de modes de réalisation de l'invention

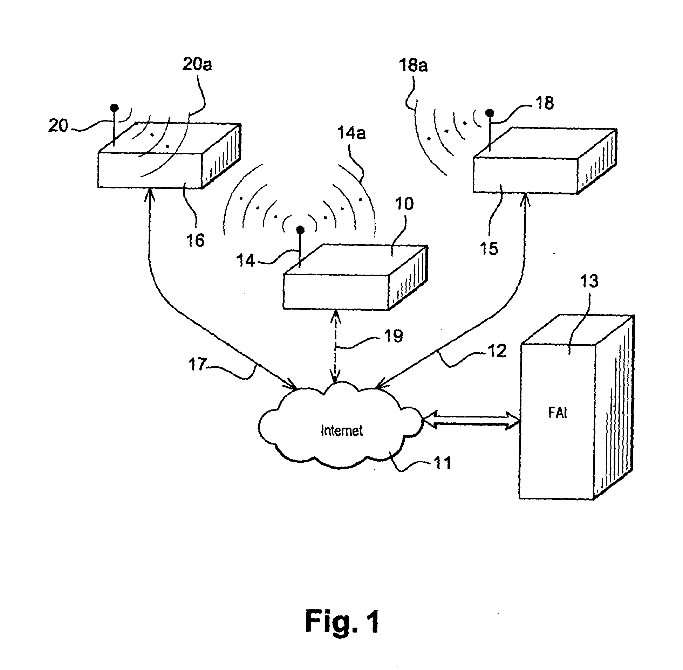

La figure 1 montre un boîtier 10 multiservice principal de connexion de terminaux (ordinateur, téléphone, télévision etc....non représentés) d'un utilisateur à un réseau 11 Internet via un réseau 19 haut débit ou très haut débit. Le boîtier 10 multiservice est un appareil comportant des composants électroniques et logiciels nécessaires pour avoir accès à de nombreux services de télécommunication que peuvent offrir Internet, la télévision numérique et la téléphonie cellulaire, à partir de terminaux et à travers un réseau public. Le boîtier 10 de connexion est notamment destiné à être constamment en fonction au domicile de l'utilisateur.

L'expression boîtier 10 multiservice devra également être comprise comme désignant tout type d'équipement doté :
- d'une part de fonctions d'accès à un réseau haut débit, quels que soient les moyens de transmission des informations tels que notamment : transmission via un réseau filaire, radio, par ondes courtes ou moyennes ou une combinaison de ces modes de transmission, et
- d'autre part de fonctions d'accès à un réseau de type sans fil de type Wi-Fi.

Dans un mode de réalisation, le réseau 19 haut débit peut être un réseau xDSL pour Digital Subscriber Line en anglais ou ligne d'abonné numérique, dans ce cas, le boîtier 10 multiservice comporte un modem xDSL.

Dans une variante, le réseau 19 haut débit peut être un réseau satellite, dans ce cas, le boîtier 10 multiservice comporte une interface d'accès audit réseau.

Dans une autre variante, le réseau 19 haut débit peut être un réseau FTTH, pour Fiber to the Home en anglais, fibre optique jusqu'au domicile, dans ce cas le boîtier 10 multiservice comporte une interface d'accès audit réseau.

Dans le reste de la description, le réseau haut débit ou très haut débit est assimilé à un réseau ADSL. En sachant qu'il peut être tout type de réseau haut débit existant ou à venir.

Le boîtier 10 fait également office de routeur en utilisant la technologie WLAN pour Wireless Local Area Network en anglais, réseau local sans fil. La technologie Wireless est ici toute technologie capable d'établir une liaison de proximité à l'aide d'une communication radio tel que notamment le Wi-Fi, Wimax ou Bluetooth.

La boîte de connexion 10 est munie d'une borne 14 d'accès sans fil à un réseau radio. La borne 14 peut être une borne Wi-Fi, Bluetooth ou Wimax. Cette borne 14 permet aux terminaux des utilisateurs équipés de cartes, selon la technologie Wi-Fi, Wimax ou Bluetooth utilisée, de se connecter au réseau 11 Internet. La borne 14 est munie d'un module émetteur et d'un module récepteur (non représentés) d'un signal radioélectrique. Le signal radio issu d'un module émetteur d'un terminal de l'utilisateur est capté par la borne 14 d'accès sans fil du boîtier 10 principal qui se charge de le relayer vers le réseau 11 Internet.

La borne 14 a un champ d'action, nommé réseau local 14ₐ, de quelques dizaines de mètres matérialisé par une succession d'arcs et de points centrés sensiblement sur la borne 14. A chaque réseau local d'une borne d'accès sans fil est associé un nom de réseau

Dans l'exemple de la figure 1, des boîtiers 15 et 16 secondaires se trouvent à proximité du boîtier 10 principal de l'utilisateur. Les boîtiers 15 et 16 secondaires comportent respectivement une borne 18 et 20 d'accès sans fil à laquelle est associé respectivement un réseau local 18ₐ et 20ₐ.

Le boîtier 10 principal et les boîtiers 15 et 16 secondaires sont reliés à un serveur 13 du FAI via le réseau 11 Internet à travers respectivement leur réseau haut débit 19 12 et 17.

Dans la description, on prête des actions à des appareils ou à des programmes, cela signifie que ces actions sont exécutées par un microprocesseur de cet appareil ou de l'appareil comportant le programme, ledit microprocesseur étant alors commandé par des codes instructions enregistrés dans une mémoire de l'appareil. Ces codes instructions permettent de mettre en oeuvre les moyens de l'appareil et donc de réaliser l'action entreprise.

Le boîtier 10 principal comporte un microprocesseur 21 connecté à un bus 22. Le boîtier 10 principal comporte aussi une mémoire 23 de programme et une mémoire 24 de données. La mémoire 23 de programme est divisée en plusieurs zones, chaque zone correspondant à une fonction ou à un mode de fonctionnement du programme du boîtier 10.

Une zone 25 comporte des codes instructions pour évaluer un état de connexion du boîtier 10 principal au réseau 19 haut débit. Une zone 26 comporte des codes instructions pour l'élaboration et l'émission d'une requête 27 de sondage. Cette requête 27 de sondage est émise sur le réseau local 14ₐ du boitier 10 principal. Cette requête de sondage a pour but de détecter les réseaux haut débit avoisinants disponibles. La requête 27 de sondage est de préférence dans un format standard. Elle comporte notamment deux champs. Un premier champ 27a indique le nom du réseau local 14ₐ du boîtier 10 principal. Un deuxième champ 27b indique un message de demande de transmission d'une requête via Réseau 11 Internet.

Une zone 28 comporte des codes instructions pour recevoir du réseau 14ₐ local des requêtes 29 de balises émises par des boîtiers 15, 16 secondaires avoisinants, en réponse à la requête de sondage 27. Les codes instructions de la zone 28 traitent le contenu des requêtes 29 de balises reçues afin de les qualifier en leur affectant un attribut de qualité. Un attribut de qualité est, par exemple, un pourcentage sur la qualité du signal émis par les réseaux locaux des boîtiers secondaires environnants.

Une zone 30 comporte des codes instructions pour sélectionner un boîtier secondaire en fonction de l'attribut affecté à la requête 29 de balise dudit boîtier selon des critères de discrimination préalablement définis.

Une zone 31 comporte des codes instructions pour émettre une requête 32 d'urgence au boîtier secondaire sélectionné via le réseau local 14ₐ. La requête 32 d'urgence est de préférence dans un format standard. Elle comporte par exemple six champs. Un premier champ 32a indique l'identifiant/adresse du boîtier 15 secondaire sur le réseau 11 Internet. Cet identifiant/adresse permet au réseau 11 Internet d'identifier l'ulilisateur. Un identifiant/adresse peut être lié à une adresse Internent IP (protocole Internet).

Un deuxième champ 32b indique le nom du réseau local 18ₐ du boîtier 15 secondaire. Un troisième champ 32c indique le nom du réseau local 14ₐ du boîtier 10 principal. Un quatrième champ 32d indique l'identifiant/adresse affecté par le boîtier secondaire au boîtier 10 principal sur le réseau 11 Internet. Un cinquième champ 32e indique l'identifiant/adresse du serveur du FAI où ladite requête doit être transmise. Un sixième champ 32f comporte un état de configuration du boîtier principal.

Cet exemple de la requête 32 d'urgence n'est donné qu'à titre indicatif. Elle comporte nécessairement l'état de configuration du boîtier principal.

Une zone 33 comporte des codes instructions pour émettre une requête de partage de ressources au boîtier secondaire sélectionné via le réseau local 14ₐ. Une zone 34 comporte des codes instructions pour recevoir du boîtier secondaire sélectionné, via le réseau local 14ₐ, une réponse à la requête de partage de ressources. Les codes instructions de la zone 34 traitent le contenu de la réponse reçue.

Les boîtiers de connexions secondaires 15 et 16 comportent la mémoire 23 de programme et la mémoire 24 de données du boîtier 10 principal.

Le boîtier de connexion secondaire 15, identique au boîtier secondaire 16, comporte un microprocesseur 40 connecté à un bus 41. Le boîtier secondaire 15 comporte aussi une mémoire 42 de programme et une mémoire 43 de données. La mémoire 42 de programme est divisée en plusieurs zones, chaque zone correspondant à une fonction ou à un mode de fonctionnement du programme du boîtier secondaire 15.

Une zone 44 comporte des codes instructions pour recevoir du réseau 18ₐ local une requête 27 de sondage. Une zone 45 comporte des codes instructions correspondant à l'élaboration d'une requête 29 de balise en réponse à la requête 27 de sondage reçue. La requête 29 de balise est de préférence dans un format standard. Elle comporte notamment huit champs. Un premier champ 29a indique le nom du réseau 18ₐ local dudit boîtier secondaire. Un deuxième champ 29b indique la bande passante du réseau 18ₐ local du boîtier 15 secondaire. Un troisième champ 29c indique la qualité du signal du réseau 18ₐ local du boîtier 15 secondaire. Un quatrième champ 29d indique l'identifiant/adresse du boîtier 15 secondaire sur le réseau 11 Internet. Un cinquième champ 29e indique le nom du réseau 14ₐ local du boîtier 10 principal.

Un sixième champ 29f indique l'identifiant/adresse affecté par le boîtier secondaire au boîtier 10 principal sur le réseau 11 Internet. Le boîtier secondaire considère, lors de cette affectation, le boîtier 10 principal comme un terminal. Un septième champ 29g indique les débits que le réseau 12 haut débit du boîtier 15 secondaire peuvent supporter. Un huitième champ 29h indique le nombre de terminaux connectés au réseau 12 haut débit.

La requête 29 de balise comporte ainsi des informations relatives à la capacité et aux ressources du réseau 18ₐ local ainsi que celles relatives au réseau 12 haut débit du boîtier secondaire correspondant.

Une zone 46 comporte des codes instructions pour émettre cette requête 29 de balise sur le réseau 18ₐ local du boitier secondaire 15 vers le réseau 14ₐ local du boîtier 10 principal.

Une zone 47 comporte des codes instructions pour recevoir du réseau 14ₐ local du boîtier 10 principal une requête 32 d'urgence. Les codes instructions de la zone 47 traitent le contenu de requête 32 d'urgence et le transmettent au serveur 13 du FAI, via le réseau 12 haut débit. Une zone 48 comporte des codes instructions pour recevoir du réseau 14ₐ local du boîtier principal une requête de partage de ressources. Les codes instructions de la zone 48 traitent le contenu de la requête de partage de ressources et le transmettent au serveur 13 du FAI, via le réseau 11 Internet, ou y font directement droit selon des critères d'autorisation prédéfinis.

Le boîtier de connexion principal comporte la mémoire 42 de programme et la mémoire 43 de données du boîtier secondaire.

La représentation des zones/mémoires n'est qu'une illustration d'implantation de composants et d'enregistrements de données. Dans la pratique, ces mémoires sont unifiées ou distribuées selon des contraintes de taille de la base de données et/ou de rapidité des traitements souhaités.

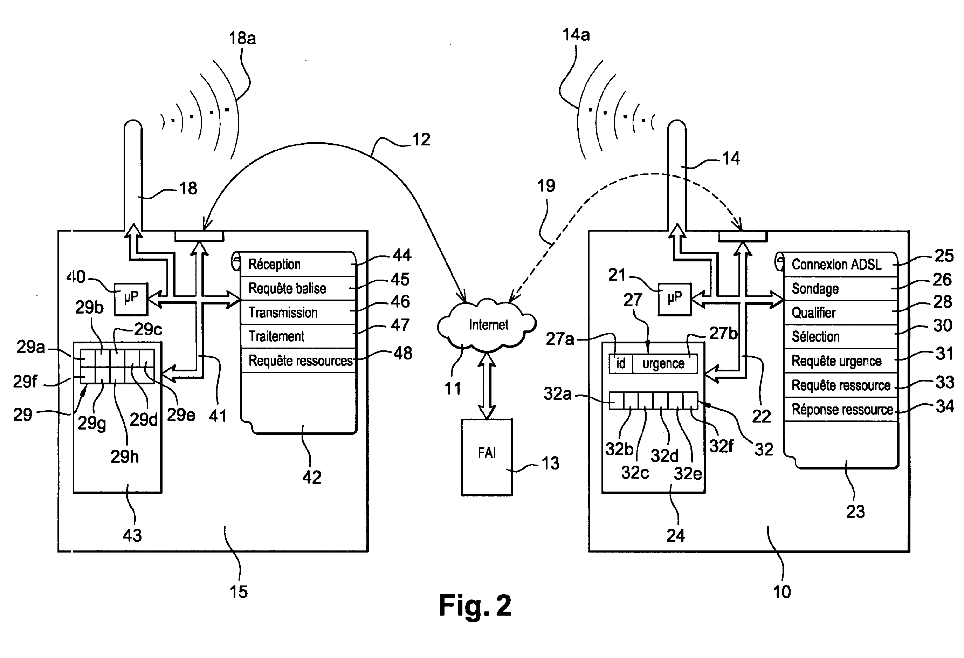

Dans l'exemple des figures 1 et 2, le boîtier 10 principal de l'utilisateur voit sa connexion au réseau 19 haut débit interrompue. Cette interruption est matérialisée par des pointillés du réseau 19. Dans l'exemple des figures 1 et 2, le boîtier principal est réputé ne pas permettre la connexion du terminal utilisateur client au réseau 11 Internet. Les boîtiers secondaires 15 et 16 situés à proximité ont leur réseau haut débit, représenté en trait plein respectivement sous les références 12 et 17, qui fonctionne. Ils détectent une requête 27 de sondage émis par le boîtier principal via leur réseau local sans fil et envoie en réponse une requête 29 de balise. Dans l'exemple des figures 1 et 2, le boîtier secondaire 15 est sélectionné pour faire suivre la requête 32 d'urgence au serveur du FAI.

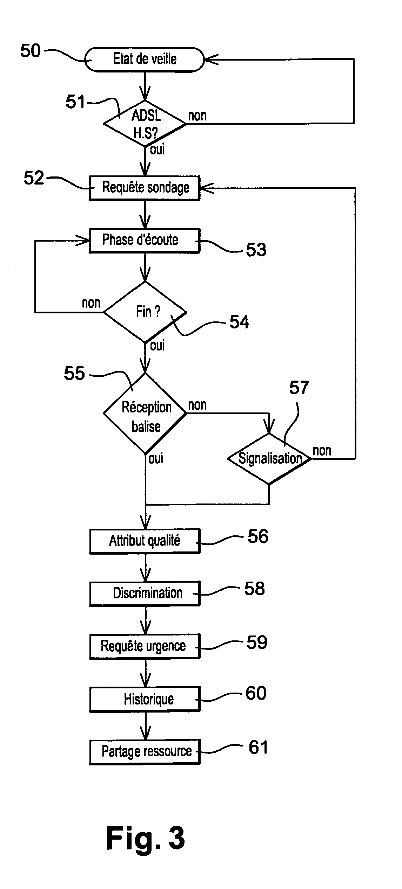

La figure 3 montre une illustration d'étapes correspondant à une mise en oeuvre du procédé selon l'invention. La figure 3 montre une première étape préliminaire 50, dans laquelle le procédé selon l'invention est mis en mode veille. Lorsque le procédé selon l'invention est mis dans cet état de veille, le boîtier 10 principal fonctionne normalement. Le procédé selon l'invention n'est exécuté par le boîtier 10 principal que lorsque la connexion au réseau 19 haut débit est interrompue, à une étape 51.

Si la connexion au réseau 19 haut débit de l'utilisateur est interrompue de façon persistance c'est-à-dire au-delà d'une temporisation, alors le boîtier 10 principal élabore une requête 27 de sondage et le transmet via son réseau 14ₐ local aux boîtiers secondaires avoisinants, à une étape 52. Cette interruption est due en général à un problème de synchronisation entre le boîtier 10 principal et le signal haut débit. Le signal haut débit peut être un signal xDSL émis par le DSLAM. Cette interruption peut être également due à une désynchronisation intempestive du signal haut débit ou à une panne des serveurs d'authentification du FAI.

Le boîtier 10 principal déclenche, à une étape 53 suivante, une fenêtre d'écoute de messages reçus en réponse à la requête 27 de sondage. Pour ce faire, il lance un compteur à rebours, dont la durée est par exemple de l'ordre de quelques centaines de millisecondes, temps pendant lequel il écoute les ondes pour s'assurer de recevoir des réponses de toutes les bornes d'accès 18 et 20 à proximité. L'issue de la fenêtre d'écoute est obtenue lorsque le compteur à rebours arrive à zéro, à une étape 54.

A une étape 55, si le boîtier principal a reçu des requêtes 29 de balise alors il exécute l'étape 56 d'affectation d'attribut de qualité. Sinon, le boîtier principal détermine à une étape 57 s'il a reçu des signalisations en réponse à la requête 27 de sondage émise par des téléphones mobiles. Les signalisations comportent entre autres les mêmes champs que la requête 29 de balise émise par un boîtier secondaire.

Dans le reste de la description, seule la requête 29 de balise est traitée en sachant que le traitement pour les signalisations est le même. Les requêtes 29 de balise et les signalisations ne seront pas traitées par le boîtier principal si elles sont reçues après la phase d'écoute.

Ce processus de scrutation de requête 29 de balise pendant la phase d'écoute permet au boîtier principal de disposer de l'ensemble des données relatives à chacune des bornes 18, 20 d'accès avoisinantes. Ainsi, le boîtier 10 principal collecte les noms des réseaux locaux radio disponibles dans sa zone géographique. Ce processus permet également au boîtier principal de disposer des données de puissance radioélectrique du signal reçues de la part des bornes secondaires.

Si aucune requête 29 de balise ou de signalisation n'est reçue par le boîtier 10 principal, alors une nouvelle requête 27 de sondage est retransmise pendant une nouvelle phase d'écoute.

Le boîtier 10 principal traite le contenu des champs des requêtes 29 de balise afin d'affecter à chacune un attribut de qualité, à l'étape 56. Pour déterminer l'attribut à affecter, le boîtier 10 principal compare, pour chaque requête 29 de balise reçue, la valeur de la bande passante contenue dans le deuxième champ 29b, à un seuil de bande passante préalablement défini.

Le boîtier 10 principal attribue un premier paramètre résultant de la comparaison entre la bande passante et le seuil de bande passante. Ce paramètre peut être un nombre binaire. Dans ce cas, ce paramètre peut être égal à zéro, lorsque la bande passante est inférieure au seuil, et à un lorsqu'elle est supérieure ou égale au seuil.

Le boîtier principal détermine également pour chaque requête 29 de balise reçue la valeur de la qualité du signal du réseau 18ₐ local du boîtier 15 secondaire contenue dans le troisième champ 29c. Puis la distance à laquelle se situe la borne secondaire correspondante est déterminée en fonction de cette qualité du signal. En effet, d'une manière générale, plus un point d'accès est proche, meilleur est le débit. Puis, cette distance est comparée par le boîtier principal à un seuil de distance de qualité de signal préalablement défini. Le boîtier 10 principal attribue un deuxième paramètre résultant de cette comparaison. Lorsque ce paramètre est un nombre binaire, il peut être égal à zéro lorsque la distance déterminée est inférieure au seuil et à un lorsqu'elle est supérieure ou égale au seuil. Le seuil de bande passante et le seuil de qualité de signal sont déterminés de sorte à permettre la transmission de la requête 32 d'urgence au serveur 13 du FAI, via le boîtier secondaire correspondant, sans perte d'information. Dans un exemple, le seuil de bande passante est égal à environ 4 à 5 Mbit/s, de façon à ne pas perturber les autres usages du boîtier secondaire.

Dans une variante, le paramètre peut également être un nombre alphanumérique.

Pour chaque requête 29 de balise reçue, le boîtier principal détermine l'attribut de qualité à accorder à ladite requête en combinant les paramètres attribués.

A une étape 58, le boîtier principal détermine, pour chaque requête 29 de balise reçue, la bande passante restante du réseau 12 haut débit du boîtier secondaire. Pour ce faire, le boîtier principal traite les données contenues dans le septième champ 29g et le huitième champ 29h de la requête 29 de balise. En fonction des débits utilisés par chaque terminal connectés au réseau haut débit, le boîtier principal calcule le débit restant. Puis, le boîtier 10 principal finalise la sélection en appliquant une opération de discrimination aux attributs de qualité et aux débits restants des requêtes 29 de balises reçues.

Cette opération de discrimination est de préférence un maximum. Plus le débit restant et l'attribut de qualité sont forts, plus le boîtier secondaire correspondant est privilégié comme étant un dispositif de relais. L'opération de discrimination peut être également un opérateur logique. L'opération de discrimination permet au boîtier principal de choisir le boîtier secondaire selon le meilleur compromis de débit et de charge.

L'opération de discrimination prend aussi en compte le nom et le type de sécurisation des réseaux sans fil 18a et 20a, l'appartenance au même FAI des boîtiers 15 et 16 et généralement tout type de critère garantissant la bonne réalisation de la requête 32 d'urgence à venir.

A une étape 59, le boîtier principal élabore une requête 32 d'urgence comportant son état de configuration. L'état de configuration comporte entre autres, les informations suivantes :
- l'état de branchement des connectiques du boîtier principal,
- l'adresse du contrôle d'accès support (plus connu sous le nom anglais MAC pour Medium Access Control) du boîtier principal,
- les terminaux connectés au boîtier principal,
- les derniers débits, montant et descendant, enregistrés avant l'interruption de la connexion haut débit,
- la date de la dernière mise à jour du boîtier principal,
- la version de la dernière mise à jour,
- la date de la dernière synchronisation avec le signal haut débit,
- la version du boîtier principal,
- les erreurs de connexion.

Cette requête 32 d'urgence est transmise vers le boîtier secondaire sélectionné qui le fait suivre au serveur du FAI, via le réseau 11 Internet.

L'envoi de cette requête 32 d'urgence au serveur du FAI permet à ce dernier d'établir un premier diagnostic sur les causes de l'interruption de la connexion ADSL. Lorsque cette requête 32 n'est pas reçue par le serveur FAI et que la connexion ADSL est interrompue, on peut déjà établir que cette interruption n'est pas due à un problème de synchronisation mais plutôt à un problème logiciel.

A la différence des boîtiers secondaires, la requête 32 d'urgence est transmise par le téléphone mobile sélectionné, via le réseau téléphonique. En ce sens, le téléphone mobile se comporte comme un modem haut débit servant d'interface entre le boîtier principal et le serveur du FAI.

A une étape 60, le microprocesseur du serveur du FAI exécute des codes instructions pour collecter les données concernant notamment l'historique des requêtes 32 d'urgence reçues. Ces données peuvent être collectées dans une base de données interne ou externe au serveur 13. Ces données collectées sont traitées afin d'obtenir des statistiques d'interruption de connexion haut débit d'une zone du réseau de l'opérateur. Ces statistiques sont interprétées par l'opérateur afin d'optimiser le fonctionnement de son réseau. Ainsi, l'opérateur du FAI détectera rapidement, parfois même avant les utilisateurs, qu'un secteur géographique donné présente des problèmes de connexions haut débit. L'invention permet ainsi de diagnostiquer rapidement des pannes sur des équipements du réseau

Au vu des informations contenues dans les requêtes 32 d'urgence, l'administrateur du réseau du FAI est à même d'établir un premier diagnostic fiable et complet.

A une étape 61, le boîtier principal élabore et transmet au boîtier secondaire sélectionné une requête de partage de ressources. Cette requête comporte entre autres l'identifiant/adresse du boîtier 15 secondaire sélectionné, le nom du réseau local du boîtier secondaire sélectionné, l'identifiant/adresse affecté par le boîtier secondaire au boîtier 10 principal sur le réseau 11 Internet et l'identifiant/adresse du boîtier 10 principal. Cette requête de partage de ressources permet aux utilisateurs du boîtier principal d'être connectés au réseau Internet et d'utiliser la téléphonie via les ressources du boîtier secondaire sélectionné.

Aujourd'hui, la prise de contrôle à distance d'un boîtier multiservice par le FAI existe déjà, mais elle passe nécessairement par la connexion haut débit. De ce fait, en cas de panne de la connexion haut débit cette prise de contrôle n'est plus possible. Avec l'invention, le partage de ressources du boîtier 15 sélectionné permet à l'administrateur du réseau du FAI d'effectuer une prise de contrôle à distance du boîtier multiservice 10 via le boîtier multiservice 15 sélectionné. Ainsi, si cette prise de contrôle est nécessaire, par exemple dans le cas d'un mauvais paramétrage du boîtier, l'administrateur peut effectuer un dépannage à distance du boîtier 10 multiservice.

Dans un mode de réalisation préféré, le boîtier secondaire sélectionné élabore une requête de demande d'autorisation comportant la requête de partage de ressources reçue. Cette requête de demande d'autorisation est transmise par le boîtier secondaire au serveur du FAI, via le réseau 11 Internet. Cette requête de demande d'autorisation comporte en outre la capacité et les ressources du boîtier 15 secondaire. Le microprocesseur du serveur du FAI exécute des codes instructions pour traiter la requête de demande d'autorisation reçue.

En fonction de critères d'autorisation préalablement définis, le serveur FAI traite la requête d'autorisation et envoie une signalisation d'autorisation ou de refus, de partage de ressources du boîtier secondaire sélectionné. La signalisation d'autorisation de partage de ressources comporte entre autres une limitation de la bande passante à allouer au boîtier principal.

Dans un mode de réalisation préféré, la bande passante allouée est de 128Kb. Dans une variante, elle est proportionnelle à la bande passante du boîtier secondaire sélectionné, exemple, elle est égale à 1% de la bande passante du boîtier secondaire sélectionné.

Les critères d'autorisation sont déterminés de sorte à ne pas permettre l'allocation de ressources au boîtier principal au détriment des utilisateurs du boîtier secondaire sélectionné.

Dans une variante, le boîtier secondaire traite lui-même la requête de partage de ressources pour y faire droit ou non selon les critères d"autorisation préétablis.

L'invention ne se limite pas aux modes de réalisation représentés sur les figures.

En particulier, lorsqu'aucune requête 29 de balise ou de signalisation n'est reçue en réponse à la requête 27de sondage via la technologie Wi-fi à la fin de la phase d'écoute, il peut être envisagé de retransmettre la requête 27 de sondage via la technologie Bluetooth ou Wimax ou autres, ou vice versa. Dans ce cas, les boîtiers de connexion du FAI sont équipés de moyens de communication adaptés à ces technologies.

Dans une variante, durant la phase d'écoute de l'étape 53, la requête 27 de sondage est transmise via la technologie Wi-Fi, via la technologie Wimax et via la technologie Bluetooth.

Dans une variante le téléphone mobile peut être un assistant personnel ou tout autre dispositif équivalent.

Dans une variante, si les moyens de transmission sans fil du boîtier 10 multiservice ne sont pas activés, le microprocesseur 21 exécute des codes d'instructions d'activation automatique du borne 14 d'accès.

L'invention permet une remontée rapide vers le serveur du FAI d'une alarme et d'un diagnostic d'un box multiservice ayant sa connexion ADSL en panne. Cette remontée est réalisée selon l'invention via la connectivité sans fil d'un box voisin autorisé à communiquer avec le serveur du FAI. L'invention permet ainsi, aux clients du FAI, d'éviter des heures de communications téléphoniques entre le client et le service client du FAI.

Un avantage de l'invention est que lors d'une première installation d'un boitier multiservice, une requête d'urgence est envoyée automatiquement au serveur du FAI, dès que ledit boîtier est alimenté. Ainsi, si le client appelle le Service Client du FAI, des informations contenues dans la requête d'urgence permettront une assistance précise : par exemple visibilité sur le branchement des câbles, détection de la porteuse etc....

## Revendications

1. Procédé de transmission automatique d'une requête (42) d'urgence d'autodiagnostic d'un boîtier (10) principal multiservice à un serveur (13) d'un réseau (12, 17, 19) haut débit **caractérisé en ce qu'**il comporte les étapes suivantes :
- on détecte (25, 51) un défaut de synchronisation du boîtier avec un signal haut débit,
- on envoie (26, 52) une requête (27) de sondage de disponibilité de réseaux (12, 17) haut débit à des réseaux radio (14a, 18a, 20a) avoisinants via des moyens (14) de transmission sans fil du boîtier,
- des boîtiers (15, 16) secondaires multiservice, ayant détecté la requête de sondage via leur réseau local radio, élaborent (45) des requêtes (29) de balise comportant des informations relatives à la capacité et à la ressource de leur réseau local radio et de leur réseau haut débit,
- on transmet les requêtes de balise élaborées au boîtier principal via le réseau radio local,
- on sélectionne (30, 58) un des réseaux haut débit disponible via des critères de discrimination prédéfinis à partir des requêtes de balise reçues,
- on transmet (59) au serveur du réseau, une requête (32) d'urgence de défaut de connexion au signal haut débit via le réseau haut débit sélectionné, la requête d'urgence comportant un état de configuration du boîtier principal.

2. Procédé selon la revendication 1, **caractérisé en ce que**
- des téléphones mobiles, ayant détecté la requête de sondage via leur réseau local radio, élaborent des signalisations (57) comportant des informations relatives à la capacité et à la ressource de leur réseau local radio et de leur réseau haut débit,
- on transmet les signalisations élaborées au boîtier principal via le réseau radio.

3. Procédé selon l'une des revendications 1 à 2, **caractérisé en ce que**
- on déclenche une fenêtre (53) temporelle d'écoute de requêtes de balise et/ou de signalisations, en réponse à la requête de sondage émise par le boîtier principal. 3

4. Procédé selon l'une des revendications 1 à 3, **caractérisé en ce que** les critères de discrimination de sélection d'un réseau haut débit comportent :
- l'affectation (28, 56) à chaque requête de balise et/ou de signalisation d'un attribut de qualité déterminé en fonction de la puissance du signal, de la capacité et des ressources du réseau radio correspondant,
- la détermination des ressources des réseaux haut débit correspondants,
- le type de sécurisation des réseaux radio, et/ou
- l'appartenance au même fournisseur d'accès Internet des boîtiers multiservice secondaire ou des téléphones mobiles avec le boîtier principal.

5. Procédé selon la revendication 4, **caractérisé en ce que** la sélection des réseaux haut débit avoisinants disponibles comporte les étapes suivantes:
- on applique une opération de discrimination aux critères de discrimination,
- on privilégie un réseau haut débit en fonction du résultat de cette opération de discrimination.

6. Procédé selon la revendication 5, **caractérisé en ce que** l'opération de discrimination est un maximum ou un opérateur logique.

7. Procédé selon la revendication 5, **caractérisé en ce que**
- on émet (33, 61) du boîtier principal vers le réseau radio privilégié une requête de partage de ressource du réseau haut débit correspondant,
- on autorise la requête de partage de ressource en fonction de critères d'autorisation préalablement définis.

8. Procédé selon la revendication 7, **caractérisé en ce que**
- on émet (48, 61) du réseau haut débit sélectionné vers le serveur du réseau une requête de demande d'autorisation comportant la requête de partage de ressource reçue.

9. Procédé selon l'une des revendications 1 à 8, **caractérisé en ce que** la requête d'urgence comporte des informations relatives à un état de configuration du boîtier principal destiné à un diagnostic du défaut de connexion du boîtier principal au réseau haut débit.

10. Procédé selon l'une des revendications 1 à 9, **caractérisé en ce que**
- on collecte un historique des requêtes d'urgence dans une base de données du serveur du réseau.

11. Procédé selon l'une des revendications 1 à 10, **caractérisé en ce que** le réseau haut débit est un réseau ADSL ou un réseau satellite ou un réseau à fibre optique.

12. Procédé selon l'une des revendications 1 à 11, **caractérisé en ce que** le réseau radio est un réseau Wi-Fi et/ou un réseau Bluetooth et/ou un réseau Wimax.

13. Boîtier multiservice **caractérisé en ce qu'**il comporte:
- des moyens de détection (25, 51) d'un défaut de synchronisation du boîtier avec un signal haut débit,
- des moyens (14) de transmission sans fil d'une requête (27) de sondage de disponibilité de réseaux (12, 17) haut débit à des réseaux radio (14a, 18a, 20a) avoisinants,
- des moyens de réception de requêtes de balise élaborées puis transmises via le réseau radio local par des boîtiers (15, 16) secondaires multiservice ayant détecté la requête de sondage via leur réseau local radio, lesdites requêtes (29) de balise comportant des informations relatives à la capacité et à la ressource de leur réseau local radio et de leur réseau haut débit,
- des moyens de sélection (30, 58) d'un des réseaux haut débit disponible via des critères de discrimination prédéfinis à partir des requêtes de balise reçues,
- des moyens de transmission (59) au serveur du réseau, d'une requête (32) d'urgence de défaut de connexion au signal haut débit via le réseau haut débit sélectionné, la requête d'urgence comportant un état de configuration dudit boîtier multiservice.

## Claims

1. Method for automatically transmitting an urgency request (10) for the auto-diagnosis of a main multiservice box (10) to a server (13) of a high data rate network (12, 17, 19), **characterized in that** it comprises the following steps:
- a synchronization failure of the box with a high data rate signal is detected (25, 51),
- a searching request (27) for the availability of high data rate networks (12, 17) is sent (26, 52) to nearby radio networks (14a, 18a, 20a) through wireless transmission means (14) of the box,
- secondary multiservice boxes (15, 16), having detected the searching request through their radio local area network, generate (45) tag requests (29) comprising information about the capacity and the resource of their radio local area network and their high data rate network,
- the generated tag requests are sent to the main box through the radio local area network,
- one of the available high data rate networks is selected (30, 58) through discrimination criteria predefined from the received tag requests,
- an urgency request (32) for a connection failure with the high data rate signal is transmitted (59) through the selected high data rate network, the urgency request comprising a configuration status for the main box.

2. Method according to claim 1, **characterized in that**
- mobile telephones, having detected the searching request through their radio local area network, generate signalizations (57) comprising information about the capacity and the resource of their radio local area network and their high data rate network,
- the generated signalizations are transmitted to the main box through the radio network.

3. Method according to one of the claims 1 to 2, **characterized in that**
- a time window (53) is started for listening to tag and/or signalization requests in response to the searching request emitted by the main box.

4. Method according to one of the claims 1 to 3, **characterized in that** the discrimination criteria for selecting a high data rate network comprise:
- the allocation (28, 56), to each tag and/or signalization request, of a quality attribute determined according to the signal power, the capacity and the resources of the corresponding radio network,
- the determination of the resources of the corresponding high data rate networks,
- the securing type for the radio network, and/or
- the belonging of the secondary multiservice box or the mobile telephones to the same Internet service provider as for the main box.

5. Method according to claim 4, **characterized in that** the selection of the available nearby high data rate networks comprise the following steps:
- a discrimination operation is applied to the discrimination criteria,
- a high data rate network is favored according to the result of this discrimination operation.

6. Method according to claim 5, **characterized in that** the discrimination operation is a maximum or a logic operator.

7. Method according to claim 5, **characterized in that**
- a resource sharing request for the corresponding high data rate network is emitted (33, 61) from the main box to the favored radio network,
- the resource sharing request is authorized according to previously defined authorization criteria.

8. Method according to claim 7, **characterized in that**
- an authorization request comprising the received resource sharing request is emitted (48, 61) from the selected high data rate network to the network server.

9. Method according to one of the claims 1 to 8, **characterized in that** the urgency request comprises information about a configuration status for the main box intended to a diagnosis of a connection failure of the main box with the high data rate network.

10. Method according to one of the claims 1 to 9, **characterized in that**
- a historic statement of the urgency request is memorized into a data base of the network server.

11. Method according to one of the claims 1 to 10, **characterized in that** the high data rate network is an ADLS network or a satellite network or an optical fiber network.

12. Method according to one of the claims 1 to 11, **characterized in that** the radio network is a WI-FI network and/or a Bluetooth network and/or a Wimax network.

13. Multiservice box **characterized in that** it comprises:
- means (25, 51) for detecting a synchronization failure of the box with a high data rate signal,
- means (14) for wireless transmitting a searching request (27) for the availability of the high data rate networks (12, 17) to nearby radio networks (14a, 18a, 20a),
- means for receiving tag requests generated, and then transmitted through the radio local area network, by secondary multiservice boxes (15, 16) having detected the searching request through their radio local area network, said tag requests (29) comprising information about the capacity and the resource of their radio local area network and their high data rate network,
- means (30, 58) for selecting one of the available high data rate networks through discrimination criteria predefined from the received tag requests,
- means (59) for transmitting, to the network server, of an urgency request (32) for a connection failure with the high data rate signal through the selected high data rate network, the urgency request comprising a configuration status for said multiservice box.

## Patentansprüche

1. Verfahren zur automatischen Übertragung eines Notantrags (42) für die Autodiagnostik eines Multiservice-Hauptgehäuses (10) zu einem Server (13) eines mit einer Hochdatenübertragungsrate arbeitenden Netzwerks (12, 17, 19), **dadurch gekennzeichnet, dass** es die folgende Schritte umfasst:
- ein Synchronisationsfehler des Gehäuses mit einem Hochdatenübertragungsratensignal wird erfasst (25, 51),
- ein Untersuchantrag (27) für die Verfügbarkeit von mit einer Hochdatenübertragungsrate arbeitenden Netzwerken (12, 17) wird durch drahtlose Übertragungsmittel (14) des Gehäuses zu benachbarten Radionetzwerken (14a, 18a, 20a) gesendet (26, 52),
- sekundäre Multiservice-Gehäuse (15, 16), welche den Untersuchantrag durch ihres lokale Radionetzwerk erfasst haben, erzeugen (45) Markierungsanträge (29), die Informationen über die Kapazität und die Ressourcen ihres lokalen Radionetzwerks und ihres Hochdatenübertragungsrate arbeitenden Netzwerks enthalten,
- die erzeugten Markierungsanträge werden durch das lokale Radionetzwerk zum Hauptgehäuse übertragen,
- eines der verfügbaren, mit einer Hochdatenübertragungsrate arbeitenden Netzwerken wird durch aus den empfangenen Markierungsanträgen vorbestimmten Unterscheidungskriterien ausgewählt (30, 58),
- ein Notantrag (32) für einen Verbindungsfehler mit dem Hochdatenübertragungsratensignal wird durch das ausgewählte, mit einer Hochdatenübertragungsrate arbeitende Netzwerk zum Netzwerkserver übertragen (59), wobei der Notantrag ein Konfigurationszustand des Hauptgehäuses enthält.

2. Verfahren nach Anspruch 1, **dadurch gekennzeichnet, dass**
- Mobiltelefone, welche den Untersuchantrag durch ihres lokale Radionetzwerk erfasst haben, Meldungen (57) erzeugen, die Informationen über die Kapazität und die Ressourcen ihres lokalen Radionetzwerks und ihres Hochdatenübertragungsrate arbeitenden Netzwerks enthalten,
- die erzeugten Meldungen werden durch das Radionetzwerk zum Hauptgehäuse übertragen.

3. Verfahren nach einem der Ansprüche 1 bis 2, **dadurch gekennzeichnet, dass**
- ein Zeitfenster (53) zum Abhören von Meldungs- und/oder Markierungsanträgen in Beantwortung des durch das Hauptgehäuse gesendeten Untersuchantrags gestartet wird.

4. Verfahren nach einem der Ansprüche 1 bis 3, **dadurch gekennzeichnet, dass** die Unterscheidungskriterien zum Auswählen eines mit einer Hochdatenübertragungsrate arbeitenden Netzwerks umfasst:
- die Zuordnung (28, 56) eines Qualitätsattributs zu jedem Meldungs- und/oder Markierungsantrag, welches abhängig von der Signalleistung, der Kapazität und der Ressourcen des entsprechenden Radionetzwerks bestimmt ist,
- die Bestimmung der Ressourcen der mit einer Hochdatenübertragungsrate arbeitenden Netzwerken,
- den Sicherungstyp für die Radionetzwerke, und/oder
- die Zugehörigkeit der sekundären Multiservice-Gehäuse oder der Mobiltelefone zu demselben Internet-Anbieter wie für das Hauptgehäuse.

5. Verfahren nach Anspruch 4, **dadurch gekennzeichnet, dass** das Auswählen der benachbarten, verfügbaren und mit einer Hochdatenübertragungsrate arbeitenden Netzwerke die folgenden Schritte umfasst:
- eine Unterscheidungsoperation wird auf die Unterscheidungskriterien angewendet,
- ein mit einer Hochdatenübertragungsrate arbeitende Netzwerk wird abhängig von des Resultats dieser Unterscheidungsoperation begünstigt.

6. Verfahren nach Anspruch 5, **dadurch gekennzeichnet, dass** die Unterscheidungsoperation ein Maximum oder ein logischer Operator ist.

7. Verfahren nach Anspruch 5, **dadurch gekennzeichnet, dass**
- ein Ressourcenaufteilungsantrag für das entsprechende, mit einer Hochdatenübertragungsrate arbeitenden Netzwerk von dem Hauptgehäuse zum begünstigten Radionetzwerk gesendet wird (33, 61),
- der Ressourcenaufteilungsantrag abhängig von vorher bestimmten Erlaubniskriterien erlaubt wird.

8. Verfahren nach Anspruch 7, **dadurch gekennzeichnet, dass**
- ein Erlaubnisantrag, der einen empfangenen Ressourcenaufteilungsantrag umfasst, von dem mit einer Hochdatenübertragungsrate arbeitenden Netzwerk zum Netzwerkserver gesendet wird (48, 61).

9. Verfahren nach einem der Ansprüche 1 bis 8, **dadurch gekennzeichnet, dass** der Notantrag Informationen über einen Konfigurationszustand des Hauptgehäuses für die Diagnostik eines Verbindungsfehlers des Hauptgehäuses mit dem mit einer Hochdatenübertragungsrate arbeitenden Netzwerk enthält.

10. Verfahren nach einem der Ansprüche 1 bis 9, **dadurch gekennzeichnet, dass**
- ein Notantragbericht in eine Datenbank des Servers gespeichert wird.

11. Verfahren nach einem der Ansprüche 1 bis 10, **dadurch gekennzeichnet, dass** das mit einer Hochdatenübertragungsrate arbeitenden Netzwerk ein ADSL-Netzwerk oder ein Satellitennetzwerk oder ein Lichtwellenleiternetzwerk ist.

12. Verfahren nach einem der Ansprüche 1 bis 11, **dadurch gekennzeichnet, dass** das Radionetzwerk ein WI-FI-Netzwerk und/oder ein Bluetooth-Netzwerk und/oder ein Wimax-Netzwerk ist.

13. Multiservice-Gehäuse, **dadurch gekennzeichnet, dass** es umfasst:
- Mittel (25, 51) zum Erfassen eines Synchronisationsfehlers des Gehäuses mit einem Hochdatenübertragungsratensignal,
- Mittel (14) zum drahtlosen Übertragen eines Untersuchantrags (27) für die Verfügbarkeit von mit einer Hochdatenübertragungsrate arbeitenden Netzwerken (12, 17) zu benachbarten Radionetzwerken (14a, 18a, 20a),
- Mittel zum Empfangen von Markierungsanträgen, die durch sekundäre Multiservice-Gehäuse (15, 16), welche den Untersuchantrag durch ihre lokalen Radionetzwerke erfasst haben, erzeugt, und dann durch das lokale Radionetzwerk übertragen werden, wobei die genannte Markierungsanträge (29) Informationen über die Kapazität und die Ressourcen ihres lokalen Radionetzwerks und ihres mit einer Hochdatenübertragungsrate arbeitenden Netzwerks enthalten,
- Mittel (30, 58) zum Auswählen eines der verfügbaren, mit einer Hochdatenübertragungsrate arbeitenden Netzwerken durch aus den empfangenen Markierungsanträgen vorbestimmten Unterscheidungskriterien,
- Mittel (59) zum Übertragen eines Notantrags (32) für einen Verbindungsfehler mit dem Hochdatenübertragungsratensignal durch das ausgewählte, mit einer Hochdatenübertragungsrate arbeitende Netzwerk zum Netzwerkserver, wobei der Notantrag ein Konfigurationszustand des genannten Multiservice-Gehäuses enthält.
